# EUROPÄISCHE PATENTSCHRIFT

(11) **EP 2 410 192 B1**
(45) Veröffentlichungstag und Bekanntmachung des Hinweises auf die Patenterteilung: **29.04.2015**
(21) Anmeldenummer: 11170282.5
(22) Anmeldetag: 17.06.2011
(51) Int. Cl.: F16D 25/08, F16D 25/10

(54) **Druckfluid-Betätigungsanordnung für eine Doppelkupplung**
Pressurised fluid actuation assembly for a double clutch
Agencement d'actionnement par liquide sous pression pour un embrayage double

(30) Priorität: 22.07.2010 DE 102010031664
(43) Veröffentlichungstag der Anmeldung: 25.01.2012
(73) Patentinhaber: ZF Friedrichshafen AG, 88038 Friedrichshafen (DE)
(72) Erfinder: Ort, Sebastian, 97440 Werneck (DE); Weidinger, Reinhold, 97509 Kolitzheim (DE); Jonckheere, Luc, 97440 Werneck (DE); Abu Snima, Khalid, 97520 Röthlein (DE)

(56) Entgegenhaltungen:
- DE-A1- 3 021 386
- DE-A1- 19 941 837
- DE-A1-102009 035 910
- US-A- 4 650 054

## Beschreibung

In Antriebssträngen von Kraftfahrzeugen werden in Verbindung mit Getrieben mit zwei im Allgemeinen koaxial zueinander angeordneten Getriebeeingangswellen so genannte Doppelkupplungen eingesetzt, um eine Drehmomentübertragungsverbindung einer Antriebswelle, beispielsweise einer Kurbelwelle einer Brennkraftmaschine, mit jeder dieser Getriebeeingangswellen herstellen zu können. Die beiden Kupplungsbereiche einer derartigen Doppelkupplung müssen dabei voneinander unabhängig betätigt werden können, beispielsweise um bei der Durchführung von Schaltvorgängen zeitlich aufeinander abgestimmt eine der Kupplungen auszurücken, wenn die andere eingerückt wird. Soll hingegen die Drehmomentübertragungsverbindung zwischen der Antriebswelle und den Getriebeeingangswellen, beispielsweise im Stand, unterbrochen sein, müssen beide Kupplungen ausgerückt gehalten sein.

Aus dem Stand der Technik sind Doppelkupplungen bekannt, die aus einer ersten, aktiv zu schließenden Kupplung (Normal-Offen-Typ) und einer zweiten aktiv zu öffnenden Kupplung (Normal-Geschlossen-Typ) bestehen.

Aus der DE 1 505 577 A ist eine Kupplungsvorrichtung mit zwei gleichachsig angeordneten Einzelkupplungen bekannt, bei der jeder Einzelkupplung eine von zwei konzentrisch zueinander angeordneten getriebeseitigen Abtriebswellen zur lösbaren Verbindung mit einer motorseitigen Antriebswelle zwecks Gangschaltung zugeordnet ist und jeder Einzelkupplung eine Ausrückvorrichtung zugeordnet ist, welche von einem die Abtriebswellen umgebenden ringförmigen Membranzylinder gebildet ist, der über eine axial verschiebbare Hülse und einen Hebel die zugeordnete Einzelkupplung betätigt.

Aus der DE 199 41 837 A1 ist eine weitere Doppelkupplung bekannt, welche eine Betätigungsanordnung umfasst mit einer ringförmigen Zylinderführungseinheit und zwei koaxial zu einer Zentralachse der Doppelkupplung angeordneten und an der Zylinderführungseinheit fluiddicht verschiebbar geführten ringförmigen Betätigungszylindern zur Kraftbeaufschlagung eines jeweils zugeordneten Kupplungsbereichs der Doppelkupplung.

Die Betätigung der bekannten Kupplungen erfolgt derart, dass beide Kupplungen mit Kraft beaufschlagt werden müssen oder beide Kupplungen kraftfrei sein müssen, um im Ergebnis eine der Kupplungen zu öffnen und die andere zu schließen. Der Vorteil dieser Lösung ist eine weitgehende Kraftfreiheit gegenüber angrenzenden Komponenten, wie z. B. einer Kurbelwelle, und somit eine Vermeidung zusätzlicher Belastungen angrenzender Lager. Nachteilig an den bekannten Lösungen ist jedoch, dass die Betätigungssysteme entweder sehr kompliziert zu fertigen sind oder sehr viel Bauraum benötigen.

Mit der DE 30 21 386 A1 ist eine Druckfluid-Betätigungsanordnung für eine Doppelkupplung gemäß dem Oberbegriff von Patentanspruch 1 bekannt geworden, welche eine ringförmige Zylinderführungseinheit und zwei koaxial zu einer Zentralachse angeordnete und an der Zylinderführungseinheit fluiddicht verschiebbar geführte ringförmige Betätigungszylinder zur Kraftbeaufschlagung eines jeweils zugeordneten Kupplungsbereichs der Doppelkupplung umfasst. Dabei bildet die Zylinderführungseinheit mit einem ersten der Betätigungszylinder eine erste Betätigungskammer und mit einem zweiten der Betätigungszylinder eine zweite Betätigungskammer zur Aufnahme von Druckfluid aus, wobei sich die zwei Betätigungskammern radial überlappen. Die Druckfluid-Betätigungsanordnung weist weiter zu den Betätigungskammern führende Druckfluidkanäle auf, wobei der mit der radial inneren Betätigungskammer verbundene Druckfluidkanal innerhalb der Zylinderführungseinheit und der mit der radial äußeren Betätigungskammer verbundene Druckfluidkanal in dem zugeordneten Betätigungszylinder ausgebildet ist. Das hat zur Folge, dass sich eine außen angeschlossene Fluiddruckleitung bei einer Kupplungsbetätigung mit diesem Betätigungszylinder mitbewegt und daher flexibel ausgestaltet sein muss.

Es ist von diesem Stand der Technik ausgehend Aufgabe der vorliegenden Erfindung, eine Druckfluid-Betätigungsanordnung für eine Doppelkupplung bereitzustellen, welche sich bei kompakter Baugröße einfach fertigen und montieren lässt, eine voneinander unabhängige Betätigung der beiden Kupplungsbereiche erlaubt und eine verbesserte Anschlussmöglichkeit einer Fluiddruckleitung bietet.

Erfindungsgemäß wird diese Aufgabe durch eine gattungsgemäße Druckfluid-Betätigungsanordnung für eine Doppelkupplung gelöst, welche sich dadurch auszeichnet, dass die Druckfluidkanäle für beide Betätigungskammern in der Zylinderführungseinheit ausgebildet und im Wesentlichen auf gleichem radialen Niveau angeordnet sind. Diese Anordnung schafft eine besonders kompakte Baugröße der Druckfluid-Betätigungsanordnung, insbesondere radial kurzbauende Anordnung. Darüber hinaus erlaubt die Ausbildung der Druckfluidkanäle in der Zylinderführungseinheit eine einfache Fertigung und Montage, da keine zusätzlichen Anschlussteile zur Ausbildung der Druckfluidkanäle notwendig sind und diese durch kostengünstige Bohrungen in der Zylinderführungseinheit ausgebildet werden können. Eine flexible Fluiddruckleitung kann somit entfallen.

Vorteilhafte Ausgestaltungen und Weiterbildungen der Erfindung sind in den abhängigen Ansprüchen angegeben.

Gemäß einer ersten vorteilhaften Ausgestaltung ist die erste Betätigungskammer im Wesentlichen zwischen dem ersten Betätigungszylinder und der Stirnseite der Führungseinheit gebildet, wodurch sich ebenfalls eine in radialer Richtung sehr kompakte Ausgestaltung realisieren lässt.

Diesbezüglich sei jedoch darauf hingewiesen, dass unter dem Begriff "Stirnseite der Zylinderführungseinheit" im Sinne der Erfindung die in axialer Richtung der Zylinderführungseinheit weisende Fläche bzw. weisenden Flächen zu verstehen ist/sind, welche zu einer axialen Verschiebung des ersten Betätigungszylinders beiträgt bzw. beitragen.

Vorzugsweise weist jeder Betätigungszylinder von den zwei Betätigungszylindern zwei in einer radialen Richtung einander gegenüberliegende Zylinderseitenwände auf, welche miteinander durch einen Zylinderboden verbunden sind. Obwohl der Zylinderboden die gegenüberliegenden Zylinderseitenwände an jeder beliebigen Stelle verbinden kann, wird dieser vorzugsweise so angeordnet sein, dass er die einen axialen Enden der zwei Zylinderseitenwände in der radialen Richtung verbindet, um so gemeinsam mit den beiden Zylinderseitenwänden einen in einer axialen Richtung offenen Ringraum mit maximalem Volumen zu begrenzen. Auf diese Weise wird zur Erzielung einer größtmöglichen Betätigungskraft bei einem möglichst niedrigen Druck die effektiv wirkende Kolbenfläche maximiert.

Um auch in axialer Richtung eine sehr kompakte Ausgestaltung zu realisieren, kann weiterhin vorgesehen sein, dass zwischen den einander gegenüberliegenden Seitenwänden eines Betätigungszylinders ein Aufnahmeraum zur Aufnahme einer Zylinderseitenwand des jeweils anderen Betätigungszylinders gebildet ist. Obwohl jeder Betätigungszylinder einen Aufnahmeraum zur Aufnahme einer Zylinderseitenwand des jeweils anderen Betätigungszylinders aufweisen kann, muss dies jedoch nicht heißen, dass sich die beiden Betätigungszylinder in jeder Stellung überlappen, sondern lediglich, dass die beiden Zylinder theoretisch dazu in der Lage sind, sich bereichsweise zu überlappen bzw. sich ineinander zu verschieben, wobei jedoch vorzugsweise in einem Zustand maximaler axialer Annäherung zueinander teilweise jeweils eine Zylinderseitenwand des einen Betätigungszylinders in den Aufnahmeraum des anderen Betätigungszylinders verlagert ist.

Um eine gegenseitige Beeinflussung der sich in axialer Richtung überlappenden Betätigungszylinder auszuschließen, kann vorgesehen sein, dass die Zylinderführungseinheit einen radial äußeren ringförmigen Zylinderführungsteil und einen konzentrisch zu dem Zylinderführungsteil angeordneten, radial inneren ringförmigen Dichtungsteil aufweist, welche sowohl integral miteinander als auch separat voneinander ausgebildet sein können, wobei im Falle einer separaten Ausbildung die beiden Teile beispielsweise durch eine Schraub-, Klemm-, Reib- oder Schweißverbindung miteinander verbindbar sein können.

Weiterhin kann vorgesehen sein, dass jeweils eine Zylinderseitenwand eines Betätigungszylinders vorzugsweise unter Zwischenschaltung wenigstens eines Gleitlagerelements an dem Zylinderführungsbauteil geführt ist, um so eine reibungsfreie und fluiddichte Führung des Betätigungszylinders und Abdichtung der zugeordneten Betätigungskammer zu ermöglichen.

Insbesondere, wenn jeder Betätigungszylinder zwei in einer radialen Richtung einander gegenüberliegende Zylinderseitenwände aufweist, welche miteinander durch einen Zylinderboden verbunden sind, kann vorgesehen sein, dass der erste Betätigungszylinder mit der seiner anderen Zylinderseitenwand zugewandten Seite seiner radial äußeren Zylinderseitenwand an der radialen Außenseite des Zylinderführungsteils fluiddicht verschiebbar geführt ist und der zweite Betätigungszylinder mit der von seiner anderen Zylinderseitenwand abgewandten Seite seiner radial äußeren Zylinderseitenwand an der radialen Innenseite des Zylinderführungsteils fluiddicht verschiebbar geführt ist.

Weiterhin kann vorgesehen sein, dass zwischen den einander gegenüberliegenden Seitenwänden eines Betätigungszylinders ein Aufnahmeraum zur Aufnahme des Dichtungsteils der Zylinderführungseinheit gebildet ist. Diesbezüglich kann weiterhin vorgesehen sein, dass der erste Betätigungszylinder mit der seiner anderen Zylinderseitenwand zugewandten Seite seiner radial inneren Zylinderseitenwand unter Zwischenschaltung eines Dichtungselements fluiddicht verschiebbar an der radialen Innenseite des Dichtungsteils anliegt und der zweite Betätigungszylinder mit der seiner anderen Zylinderseitenwand zugewandten Seite seiner radial inneren Zylinderseitenwand unter Zwischenschaltung eines Dichtungselements fluiddicht verschiebbar an der radialen Innenseite des Dichtungsteils anliegt.

Durch diese Ausgestaltung, in Verbindung mit der speziellen Gestaltung der Zylinderführungseinheit mit einem radial äußeren ringförmigen Zylinderführungsteil und einem konzentrisch zu dem Zylinderführungsteil verlaufenden radial inneren ringförmigen Dichtungsteil ist es möglich, die zwischen den Betätigungszylindern und dem Zylinderführungsteil auftretenden Führungskräfte über eine möglichst große Fläche zu verteilen und darüber hinaus den durch das Dichtungsteil, insbesondere das jeweilige am Dichtungsteil anliegende Dichtungselement, abzudichtenden Bereich zwischen dem Dichtungsteil und dem jeweiligen Betätigungszylinder möglichst klein zu halten.

Ferner ist es möglich, eine gegenseitige Beeinflussung der sich überlappenden Betätigungszylinder und eine Ausbildung eines gemeinsamen, beide Zylinder beeinflussenden Druckraums zu verhindern, ohne jedoch die Ausgestaltung der in der Zylinderführungseinheit ausgebildeten Druckfluidkanäle zu komplizieren, insbesondere wenn die erste Betätigungskammer zur Aufnahme von Druckfluid im Wesentlichen zwischen dem ersten Betätigungszylinder und der Stirnseite der Zylinderführungseinheit gebildet ist und die zweite Betätigungskammer radial einwärts von dem ringförmigen Zylinderführungsteil gebildet ist, da die Druckfluidkanäle in dem Zylinderführungsteil lediglich durch Ausbildung zweier in Achsrichtung verlaufender Bohrungen bereitgestellt werden können, von denen die erste geradlinig durch das gesamte Zylinderführungsteil bis zu der ersten Betätigungskammer verläuft, und von denen sich die zweite in axialer Richtung nur über einen Teil des Zylinderführungsteils erstreckt und an seinem der ersten Betätigungskammer nahen Ende mit einem beispielsweise orthogonal zu dieser verlaufenden weiteren Druckfluidkanal in Verbindung steht, welcher die Verbindung zu der zweiten Betätigungskammer in dem zweiten Betätigungszylinder sicherstellt.

Alternativ ist es auch möglich, den Druckfluidkanal zur Versorgung der zweiten Betätigungskammer nicht nur in dem Zylinderführungsteil, sondern auch in dem Dichtungsteil auszubilden.

Die Ausgestaltungsform, bei der die Druckfluidkanäle im Wesentlichen auf gleichem radialen Niveau in der Zylinderführungseinheit angeordnet sind, bietet den Vorteil, dass sie eine in radialer Richtung besonders kompakte Ausbildung des Zylinderführungsteils erlaubt, insbesondere dann, wenn die Druckfluidkanäle in Umfangsrichtung der Zylinderführungseinheit versetzt angeordnet sind, da es in diesem Fall lediglich erforderlich ist, die Zylinderführungseinheit bzw. das Zylinderführungsteil in radialer Richtung mit einer Abmessung bereit zu stellen, welche die Ausbildung eines einzigen Druckfluidkanals zwischen seinen radial gegenüberliegenden Wänden erlaubt.

Um eine gegenseitige Behinderung der beiden Kupplungsbereiche der Doppelkupplung im Betrieb zu vermeiden, kann weiterhin vorgesehen sein, dass die beiden Betätigungszylinder zur Erzeugung einer Kraftbeaufschlagungswirkung in axial entgegengesetzte Richtungen verschiebbar sind, wobei diesbezüglich weiterhin vorgesehen sein kann, dass beiden Betätigungszylindern eine diese in Richtung Kraftbeaufschlagung des zugeordneten Kupplungsbereichs vorspannende Vorspannanordnung zugeordnet ist, welche vorzugsweise eine an beiden Betätigungszylindern abgestützte Vorspannfeder umfasst.

Um eine möglichst kompakte Ausgestaltung der Druckfluid-Betätigungsanordnung zu unterstützen, kann weiterhin vorgesehen sein, dass ein radial innerer der Betätigungszylinder mit einem hülsenartigen Bauteil zur Betätigung des zugeordneten Kupplungsbereichs verbunden ist, wobei das hülsenartige Bauteil beide Betätigungszylinder und die Zylinderführungseinheit in axialer Richtung radial innen durchsetzt. Diese Ausgestaltungsform ist insbesondere dann vorteilhaft, wenn der radial innere der Betätigungszylinder der einer Getriebebaugruppe zugewandte Zylinder ist, wobei jedoch nicht ausgeschlossen sein soll, dass der radial innere der Betätigungszylinder der der Doppelkupplung zugewandte Zylinder ist, in welchem Fall dem Abschnitt des hülsenartigen Bauteils, welcher beide Betätigungszylinder und die Zylinderführungseinheit in axialer Richtung radial innen setzt, lediglich abdichtende Wirkung des Bereichs zwischen den zwei Betätigungszylindern von der radialen Innenseite her zukommt.

Bei der Betätigung einer Doppelkupplung ist es erforderlich, in definierter Abstimmung der beiden Kupplungsbereiche der Doppelkupplung Einrück- bzw. Ausrückvorgänge durchzuführen. Da dies automatisiert erfolgen muss, wird weiterhin vorgeschlagen, dass wenigstens einem Betätigungszylinder eine Sensoranordnung zugeordnet ist, um die Lage des Betätigungszylinders oder/und den am Betätigungszylinder anliegenden Fluiddruck zu erfassen. Diesbezüglich kann weiterhin vorgesehen sein, dass die Sensoranordnung einen berührungslos arbeitenden Magnetaufnehmer und einen bezüglich des Magnetaufnehmers mit dem zugeordneten Zylinder bewegbaren Permanentmagneten umfasst, wobei vorzugsweise der Magnetaufnehmer radial außerhalb des radial äußeren Betätigungszylinders im Bewegungsbereich des Permanentmagneten des zugeordneten Betätigungszylinders angeordnet ist, wodurch Betätigungsvorgängen so wenig als möglich beeinflusst werden können.

Gemäß eines weiteren Aspekts der Erfindung betrifft die vorliegende Erfindung eine Doppelkupplungsanordnung, umfassend:
- einen ersten Kupplungsbereich mit einer ersten Kupplungsscheibenbaugruppe und einer ersten Anpressplatte,
- einen zweiten Kupplungsbereich mit einer zweiten Kupplungsscheibenbaugruppe und einer zweiten Anpressplatte,
- eine Zwischenplatte zwischen den beiden Kupplungsscheibenbaugruppen,
- eine mit der Zwischenplatte verbundene Gehäuseanordnung, wobei die erste Anpressplatte und die erste Kupplungsscheibenbaugruppe an einer ersten axialen Seite der Zwischenplatte angeordnet sind und die zweite Anpressplatte, die zweite Kupplungsscheibenbaugruppe und die Gehäuseanordnung im Wesentlichen an einer zweiten axialen Seite der Zwischenplatte angeordnet sind,
- eine erste Kraftbeaufschlagungsanordnung, über welche eine Betätigungskraft auf die erste Anpressplatte leitbar ist, wobei die erste Kraftbeaufschlagungsanordnung den zweiten Kupplungsbereich und die Zwischenplatte axial übergreift und ein bezüglich der Gehäuseanordnung abgestütztes erstes Kraftbeaufschlagungselement umfasst,
- eine zweite Kraftbeaufschlagungsanordnung, über welche eine Betätigungskraft auf die zweite Anpressplatte leitbar ist, wobei die zweite Kraftbeaufschlagungsanordnung ein bezüglich der Gehäuseanordnung abgestütztes zweites Kraftbeaufschlagungselement umfasst, und
- eine Druckfluid-Betätigungsanordnung nach einem der vorangehenden Ansprüche, wobei der erste Betätigungszylinder mit der ersten Kraftbeaufschlagungsanordnung zusammenwirkt und der zweite Betätigungszylinder mit der zweiten Kraftbeaufschlagungsanordnung zusammenwirkt.

Hierbei kann beispielsweise vorgesehen sein, dass wenigstens eines der Kraftbeaufschlagungselemente als Kraftspeicher, vorzugsweise Membranfeder, ausgebildet ist, wobei weiterhin vorgesehen sein kann, dass das erste Kraftbeaufschlagungselement der ersten Kraftbeaufschlagungsanordnung in Richtung Ausrücken vorgespannt ist und das zweite Kraftbeaufschlagungselement der zweiten Kraftbeaufschlagungsanordnung in Richtung Einrücken vorgespannt ist.

Die vorliegende Erfindung wird nachfolgend unter Bezugnahme auf die beiliegenden Figuren detailliert beschrieben. Es zeigt:
- Fig. 1: eine schematische Längsschnittansicht einer Doppelkupplungsanordnung mit einer erfindungsgemäßen Druckfluid-Betätigungsanordnung;
- Fig. 2: eine Längsschnittansicht der Druckfluid-Betätigungsanordnung in einer Ebene, in der ein Druckfluidkanal zur Druckfluidversorgung einer ersten Betätigungskammer der Druckfluid-Betätigungsanordnung zu sehen ist;
- Fig. 3: eine Längsschnittansicht der Druckfluid-Betätigungsanordnung in einer Ebene, in der ein Druckfluidkanal zur Druckfluidversorgung einer zweiten Betätigungskammer der Druckfluid-Betätigungsanordnung zu sehen ist;
- Fig. 4: eine perspektivische Ansicht einer Druckfluid-Betätigungsanordnung für eine Doppelkupplung von der Getriebeseite her;
- Fig. 5: eine Längsschnittansicht durch die Druckfluid-Betätigungsanordnung von Fig. 4 in einer Ebene, in welcher eine Verbindung eines ersten Betätigungszylinders mit einem zugehörigen Positionsgeber einer Sensoreinheit zu sehen ist;
- Fig. 6: eine Längsschnittansicht durch die Druckfluid-Betätigungsanordnung von Fig. 4 in einer Ebene, in welcher ein U-förmiges Verbindungsbauteil zur Verbindung eines zweiten Betätigungszylinders der Druckfluid-Betätigungsanordnung und eines zugeordneten Positionsgebers einer Sensoreinheit zu sehen ist; und

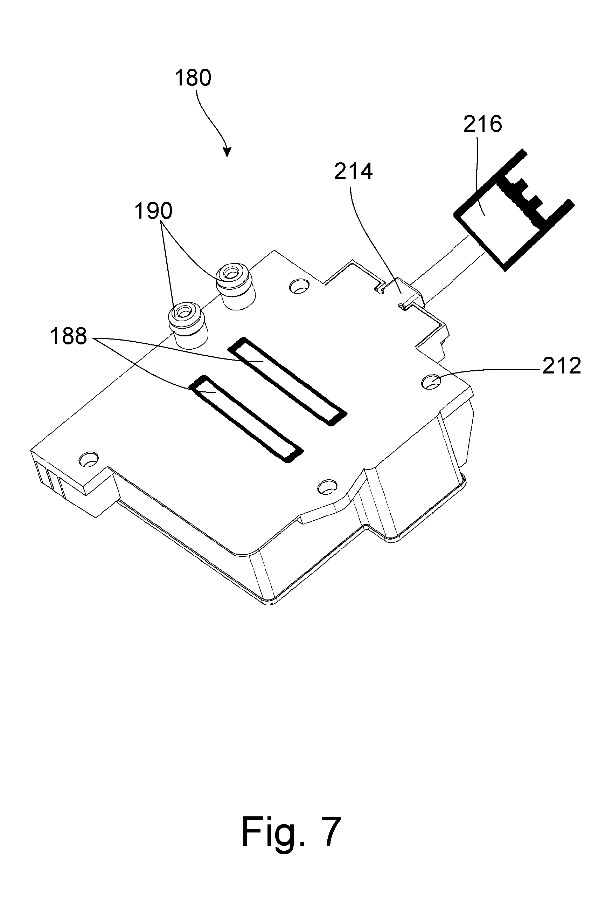

- Fig. 7: die Unterseite einer Sensoreinheit mit zwei Sensorbereichen und integriertem Drucksensor.

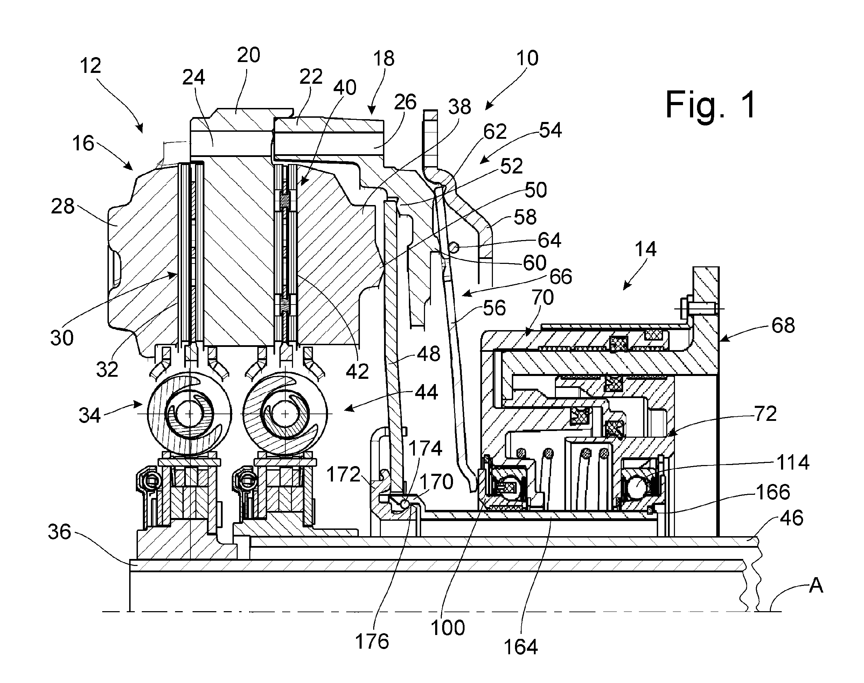

In Fig. 1 ist eine Doppelkupplungsanordnung allgemein mit 10 bezeichnet. Diese umfasst als ihre wesentlichen Systembereiche eine Doppelkupplung 12 sowie eine dieser zugeordnete und im Wesentlichen innerhalb einer nicht dargestellten Getriebeglocke angeordnete Druckfluid-Betätigungsanordnung 14.

Die Doppelkupplung 12 umfasst zwei axial im Wesentlichen nebeneinander liegende Kupplungsbereiche 16, 18. Beiden Kupplungsbereichen 16, 18 gemeinsam ist eine Zwischenplatte 20, die mit einer nicht dargestellten motorseitig angeordneten Verbindungsplatte einerseits und einem getriebeseitig angeordneten Gehäuse 22, beispielsweise durch nicht dargestellte Schraubbolzen, fest verbunden ist, welche jeweils in der Zwischenplatte 20 und dem Gehäuse 22 ausgebildete Bohrungen 24 und 26 durchsetzen. Die motorseitig angeordnete Verbindungsplatte ist mit einer Antriebswelle, beispielsweise einer Kurbelwelle einer Brennkraftmaschine, zur gemeinsamen Drehung um eine Drehachse A verbunden bzw. zu verbinden, wobei die Verbindungsplatte, die Zwischenplatte 20 und das Gehäuse 22 im Wesentlichen den Eingangsbereich der Doppelkupplung 12 bilden.

Der erste Kupplungsbereich 16 umfasst eine im Wesentlichen zwischen der Zwischenplatte 20 und der nicht dargestellten Verbindungsplatte angeordnete erste Anpressplatte 28. Die Anpressplatte 28 kann beispielsweise mit der Verbindungsplatte und/oder der Zwischenplatte 20 zur gemeinsamen Drehung um die Drehachse A drehfest, bezüglich diesen jedoch axial bewegbar gehalten sein, und ist beispielsweise durch Tangentialblattfedern oder dergleichen in Richtung Ausrücken vorspannt. Der erste Kupplungsbereich 16 weist eine erste Kupplungsscheibenbaugruppe 30 auf, deren Reibbereich 32 axial zwischen der ersten Anpressplatte 28 und der Zwischenplatte 20 gehalten ist. Radial innen ist die erste Kupplungsscheibenbaugruppe 30 über eine Torsionsschwingungsdämpferanordnung 34 mit einer radial inneren ersten Getriebeeingangswellen 36 in bekannter Weise drehfest gekoppelt.

Der zweite Kupplungsbereich 18 umfasst eine auf der anderen getriebeseitigen Axialseite der Zwischenplatte 20 angeordnete Anpressplatte 38 sowie eine zweite Kupplungsscheibenbaugruppe 40, deren Reibbereich 42 zwischen der zweiten Anpressplatte 38 und der Zwischenplatte 20 gehalten ist. Auch die zweite Kupplungsscheibenbaugruppe 40 umfasst eine Torsionsschwingungsdämpferanordnung 44 und ist in ihrem radial inneren Bereich mit einer die erste Getriebeeingangswelle 36 koaxial umgebenden radial äußeren zweiten Getriebeeingangswelle 46 zur gemeinsamen Drehung in bekannter Weise gekoppelt. Die zweite Anpressplatte 38 ist bezüglich der Zwischenplatte 20 und des Gehäuses 22 drehfest, jedoch axial beweglich gehalten und mittels einer Membranfeder 48, welche sich einerseits an einem getriebeseitigen Vorsprung 50 der zweiten Anpressplatte 38 und andererseits an einem motorseitigen Vorsprung 52 des Gehäuses 22 abstützt, in Richtung Einrücken, also zum zugeordneten Reibbereich 42 der zweiten Kupplungsscheibenbaugruppe 40 hin vorgespannt.

Eine erste Kraftbeaufschlagungsanordnung 54 des ersten Kupplungsbereichs 16 umfasst einen Hebelring 56, der radial außen einen Kraftübertragungsring 58 der ersten Kraftbeaufschlagungsanordnung 54 motorseitig belastet und sich etwas weiter radial innen an einem getriebeseitigen Vorsprung 60 des Gehäuses 22 abstützt. Über mehrere in Fig. 1 nicht erkennbare, über den Umfang um die Drehachse A verteilte, sich im Wesentlichen axial erstreckende Kraftübertragungselemente ist der Kraftübertragungsring 58 mit der ersten Anpressplatte 28 in axialer Richtung zur Kraftübertragung gekoppelt. Radial innerhalb seiner Abstützung bezüglich des Gehäuses 22 erstreckt sich der erste Hebelring 56 nach radial innen zur Wechselwirkung mit der Druckfluid-Betätigungsanordnung 14.

Der erste Kupplungsbereich 16 ist im dargestellten Beispiel vom Normal-Offen-Typ. Das heißt, der Hebelring 56, welcher beispielsweise eine Membranfeder sein kann, ist in einer Richtung vorgespannt, in welcher er den Kraftübertragungsring 58 nicht in axialer Richtung von der Zwischenplatte 20 weg belastet. Durch die Vorspannung der ersten Anpressplatte 28 in Richtung Ausrücken, also in axialer Richtung von der Zwischenplatte 20 weg, wird der Kraftübertragungsring 58 in definierter Wechselwirkung bezüglich des Hebelrings 56 gehalten. Erst wenn der Hebelring, wie im Folgenden noch dargelegt, radial innen beaufschlagt und damit in diesem Bereich in Richtung auf die Zwischenplatte 20 zu bewegt wird, drückt der Hebelring 56 radial außen den Kraftübertragungsring 58 axial von der Zwischenplatte 20 weg, so dass der Kraftübertragungsring 58 die erste Anpressplatte 28 über die nicht dargestellten Kraftübertragungselemente in Richtung Einrücken, also in Richtung auf die Zwischenplatte 20 zu, belastet.

Wie in Fig. 1 erkennbar ist, umfasst der Kraftübertragungsring 58 in seinem radial äußeren Bereich, also dort, wo der Kraftübertragungsring 58 den Hebelring 56 axial abstützt, eine nach radial innen und in Richtung Zwischenplatte 20 offene Auskehlung 62, in welche der radial äußere Randbereich des Hebelrings 56 radial eingreifen kann, um so eine sichere Führung und Zentrierung des Hebelrings 56 an dem Kraftübertragungsring 58 zu gewährleisten. Darüber hinaus ist in axialer Zuordnung zu dem getriebeseitigen Vorsprung 60 ein Sicherungsring 64 vorgesehen, welcher den Hebelring 56 in Richtung auf den getriebeseitigen Vorsprung 60 vorspannt, um so ein mögliches Abheben des Hebelrings 56 von dem getriebeseitigen Vorsprung 60, beispielsweise im lastfreien Zustand, auszuschließen und einen definierten Drehpunkt des Hebelrings 56 an dem Gehäuse 22 zu gewährleisten.

Obwohl in Fig. 1 nicht dargestellt, kann jedoch auch vorgesehen sein, dass der Kraftübertragungsring eine nach radial innen offene Umfangsnut aufweist, in welche der radial äußere Randbereich des Hebelrings 56 radial eingreifen kann, um so eine axial in beiden Richtungen feste Kopplung des Kraftübertragungsrings 58 und des Hebelrings 56 zu erreichen. Diese Ausbildung hätte zur Folge, dass dann, wenn der Hebelring 56 freigegeben wird und sich seiner eigenen Vorspannung folgend in eine maximal entspannte Position bewegt, dieser den Kraftübertragungsring 58 axial mitnehmen kann, ihn also in Richtung auf die Zwischenplatte 20 zu bewegt. Gleichzeitig bewegen die nicht dargestellten Kraftübertragungselemente die Anpressplatte 28 axial in Richtung von der Zwischenplatte 20 weg, so dass auch ohne zusätzliche Lüftkrafterzeugungsmaßnahmen, wie z. B. die bereits angesprochenen Tangentialblattfedern, dafür gesorgt ist, dass sich der erste Kupplungsbereich 16 in einem Ausrückzustand befindet, wenn die Kraftbeaufschlagungsanordnung 54 nicht mit einer Betätigungskraft belastet ist.

Der zweite Kupplungsbereich 18 der Doppelkupplung 12 ist im Wesentlichen nach Art einer herkömmlichen gedrückten Kupplung des Normal-Geschlossen-Typs ausgebildet. Eine dem zweiten Kupplungsbereich 18 zugeordnete zweite Kraftbeaufschlagungsanordnung 66 umfasst als Kraftübertragungselement die bereits angesprochene Membranfeder 48, die in einem radial äußeren Bereich an der radialen Innenseite des Gehäuses 22 an dem motorseitigen Vorsprung 52 und in einem radial mittleren Bereich an dem getriebeseitigen Vorsprung 50 der zweiten Anpressplatte 38 abgestützt ist und in diesem Bereich die zweite Anpressplatte 38 in Richtung auf die Zwischenplatte 20 zu belastet. Die sich nach radial innen erstreckenden Federzungen (nicht dargestellt) der Membranfeder 48 sind zur Durchführung von Ausrückvorgängen der zweiten Anpressplatte 38 in Richtung von der Zwischenplatte 20 weg zu bewegen, wobei die Membranfeder 48 durch die Abstützung radial außen am Gehäuse 22 in ihrem radial mittleren Bereich in axialer Richtung von der zweiten Anpressplatte 38 weg bewegt wird, wodurch sich die zweite Anpressplatte 38 ebenfalls in Richtung von der Zwischenplatte 20 weg bewegen kann.

Aus der vorangehenden Erläuterung erkennt man, dass der erste Kupplungsbereich 16 vom gedrückten Typ ist, d. h. eine Betätigungskraft, welche zur Betätigung des Kupplungsbereichs 16 in den Hebelring 56 einzuleiten ist, ist in Richtung auf die Doppelkupplung 12 zu zu richten, wohingegen der zweite Kupplungsbereich 18 vom gezogenen Typ ist, d. h., eine Betätigungskraft, welche zur Betätigung des zweiten Kupplungsbereichs 18 in die Membranfeder 48 einzuleiten ist, ist in Richtung von der Doppelkupplung 12 weg zu richten. Die Druckfluid-Betätigungsanordnung 14 drückt also auf den radial inneren Bereich des Hebelrings 56 und zieht an dem radial inneren Bereich der Membranfeder 48 und belastet sie dabei entgegen ihrer eigenen Vorspannung. Dabei wird der erste Kupplungsbereich 16 eingerückt, während der zweite Kupplungsbereich 18 ausgerückt wird.

Die Druckfluid-Betätigungsanordnung 14 umfasst als wesentliche Komponenten eine ringförmige Zylinderführungseinheit 68 und zwei koaxial zu der Drehachse A und der Zylinderführungseinheit 68 angeordnete und an der Zylinderführungseinheit 68 fluiddicht verschiebbar geführte ringförmige Betätigungszylinder 70 und 72, von denen der erste Betätigungszylinder 70 zur Betätigung des ersten Kupplungsbereichs 16 dient und der zweite Betätigungszylinder 72 zur Betätigung des zweiten Kupplungsbereichs 18 dient.

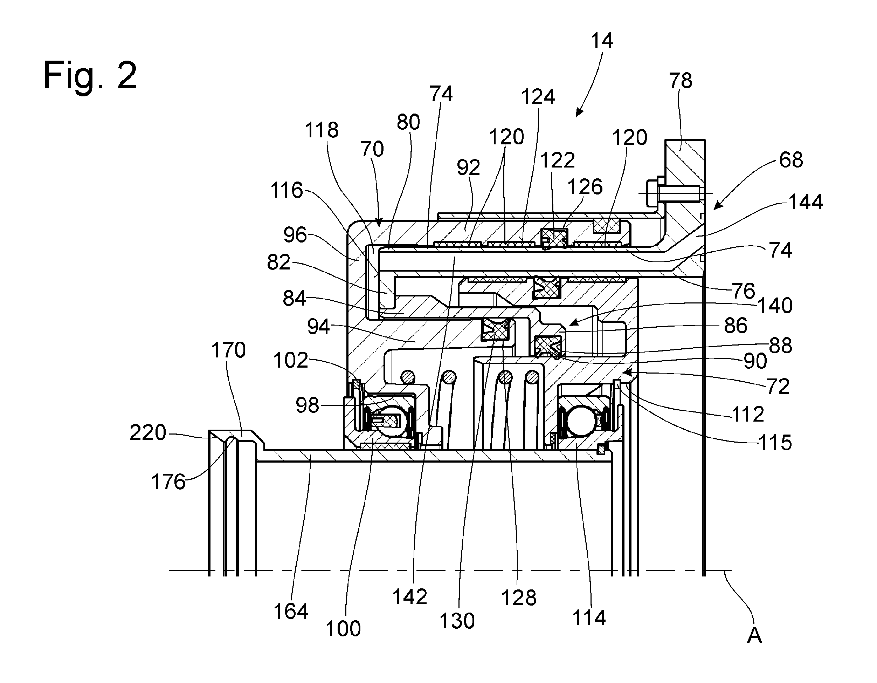

Die Zylinderführungseinheit 68 umfasst einen radial äußeren ringförmigen Führungsteil 74, welcher sich in axialer Richtung konzentrisch zur Drehachse A erstreckt, dessen getriebeseitiges Ende 76 mit einem sich radial nach außen erstreckenden Montageflansch 78 zur Befestigung an einem nicht dargestellten Getriebe versehen ist. Das kupplungsseitige Ende 80 des Führungsteils 74 ist, wie in Fig. 2 dargestellt, mit einem sich radial nach innen erstreckenden Verbindungsflansch 82 versehen, an dessen radial inneren Ende ein konzentrisch zu dem Zylinderführungsteil 74 verlaufendes radial inneres ringförmiges Dichtungsteil 84, beispielsweise durch eine Schraub-, Klemm-, Reib- oder Schweißverbindung, befestigt ist. Das Dichtungsteil 84 erstreckt sich von dem Verbindungsflansch 82 in Richtung auf das Getriebe zu und ist an seinem getriebeseitigen Ende mit einem radial nach innen weisenden Radialvorsprung 86 versehen, dessen radial inneres Ende mit einer radial nach innen weisenden Nut 88 zur Aufnahme eines Dichtungsrings 90, insbesondere Lippendichtungsring 90, versehen ist.

Der erste Betätigungszylinder 70 umfasst eine sich in einer axialen Richtung konzentrisch zu der Drehachse A erstreckende radial äußere Zylinderseitenwand 92 und eine radial einwärts von der radial äußeren Zylinderseitenwand 92 koaxial zu dieser und zu der Drehachse A verlaufende radial innere Zylinderseitenwand 94, welche an ihrem jeweiligen kupplungsseitigen Ende in radialer Richtung durch einen Zylinderboden 96 verbunden sind, welcher sich radial einwärts über das kupplungsseitige Ende der radial inneren Zylinderseitenwand 94 hinaus erstreckt und an seinem radial inneren Ende mit einer radial einwärts und in axialer Richtung auf die Doppelkupplung 12 zu offenen Aussparung 98 zur Aufnahme eines motorseitigen Betätigungslagers 100 versehen ist, welches in der Aussparung 98 in axialer Richtung mittels eines Sicherungsrings 102 festgelegt ist.

Ähnlich dem ersten Betätigungszylinder 70 weist auch der zweite Betätigungszylinder 72 zwei in einer radialen Richtung einander gegenüberliegende Zylinderseitenwände auf, nämlich eine sich im Wesentlichen in einer axialen Richtung konzentrisch zu der Drehachse A erstreckende radial äußere Zylinderseitenwand 104 und eine sich ebenfalls im Wesentlichen in einer axialen Richtung konzentrisch zu der Drehachse A erstreckende radial innere Zylinderseitenwand 106, welche getriebeseitig durch einen sich in einer radialen Richtung erstreckenden Zylinderboden 108 verbunden sind.

Die radial innere Zylinderseitenwand 106 verjüngt sich in ihrem in axialer Richtung mittleren Bereich in Richtung Doppelkupplung und ist in diesem Bereich mit einer radial nach innen vorstehenden Ringwand 110 verbunden, welche zusammen mit der radial inneren Zylinderseitenwand 106 eine radial einwärts und in axialer Richtung auf das nicht dargestellte Getriebe zu offenen Aussparung 112 zur Aufnahme eines getriebeseitigen Betätigungslagers 114 dient, welches in der Aussparung 112 in axialer Richtung mittels eines Sicherungsrings 115 festgelegt ist.

Der erste Betätigungszylinder 70 umschließt das kupplungsseitige Ende der ringförmigen Zylinderführungseinheit 68, um zwischen dem ersten Betätigungszylinder 70 und der Stirnseite der Zylinderführungseinheit 68, d. h. einer kupplungsseitigen Endfläche 116 der Zylinderführungseinheit 68 eine erste Betätigungskammer 118 zur Aufnahme von Druckfluid auszubilden. Der erste Betätigungszylinder 70 liegt dabei mit der seinen anderen Zylinderseitenwand 94 zugewandten Seite seiner radial äußeren Zylinderseitenwand 92 an der radialen Außenseite des Zylinderführungsteils 74 an unter Zwischenschaltung von drei in axialer Richtung versetzt angeordneten Gleitlagerelementen 120 und einem in axialer Richtung zwischen den Gleitlagerelementen 120 angeordneten Dichtungsring 122, welche allesamt in jeweiligen am Innenumfang der radial äußeren Zylinderseitenwand 92 ausgebildeten Nuten aufgenommen sind, um die radial äußere Zylinderseitenwand fluiddicht verschiebbar an der radialen Außenseite des Zylinderführungsteils 74 zu führen. Die Nuten zur Aufnahme der Gleitlagerelemente 120 sind dabei mit dem Bezugszeichen 124 versehen und die Nut zur Aufnahme des Dichtungsrings 122 ist mit dem Bezugszeichen 126 versehen. Zusätzlich liegt der erste Betätigungszylinder 70 mit der seiner radial äußeren Zylinderseitenwand 92 zugewandten Seite seiner radial inneren Zylinderseitenwand 94 unter Zwischenschaltung eines in einer in der radial inneren Zylinderseitenwand 94 ausgebildeten Nut 128 aufgenommenen Dichtungsrings 130 fluiddicht verschiebbar an der radialen Innenseite des in diesem Bereich geradlinig in Achsrichtung A verlaufenden Dichtungsteils 84 an, um die erste Betätigungskammer 118 fluiddicht gegenüber der Zylinderführungseinheit 68 abzudichten.

Im Gegensatz zum ersten Betätigungszylinder 70 liegt der zweite Betätigungszylinder 72 mit der von seiner radial inneren Zylinderseitenwand 106 abgewandten Seite seiner radial äußeren Zylinderseitenwand 104 an der radialen Innenseite des Zylinderführungsteils 74 unter Zwischenschaltung zweier in axialer Richtung versetzt angeordneter Gleitlagerelemente 132 und eines in axialer Richtung zwischen den Gleitlagerelementen 132 angeordneten Dichtungsrings 134 fluiddicht verschiebbar geführt an, wobei die Gleitlagerelemente 132 in jeweiligen Nuten 136 und der Dichtungsring 134 in einer axial zwischen den Nuten 136 ausgebildeten Nut 138 angeordnet sind, welche Nuten 136 und 138 jeweils im Außenumfang der radial äußeren Zylinderseitenwand 104 des zweiten Betätigungszylinders 72 ausgebildet sind. Darüber hinaus liegt der zweite Betätigungszylinder 72 mit der seiner radial äußeren Zylinderseitenwand 104 zugewandten Seite seiner in diesem Bereich geradlinig in Achsrichtung A verlaufenden radial inneren Zylinderseitenwand 106 unter Zwischenschaltung des Dichtungsrings 90 fluiddicht verschiebbar an der radialen Innenseite des Radialvorsprungs 86 des Dichtungsteils 84 an, um eine von dem zweiten Betätigungszylinder 72, dem Zylinderführungsteil 74 und dem Dichtungsteil 84 begrenzte zweite Betätigungskammer 140 fluiddicht abzudichten.

Es ist selbstverständlich, dass wenigstens diejenigen Oberflächen, an denen ein Dichtungsring oder ein Gleitlagerelement in axialer Richtung verschiebbar anliegt bzw. geführt ist, als geschliffene Oberflächen ausgebildet sein können, was in der vorliegenden Ausführungsform die radial inneren und äußeren Flächen des Zylinderführungsteils 74, die radial nach innen weisende Fläche des Dichtungsteils 84 und die radial nach außen weisende Fläche der radial inneren Zylinderseitenwand 106 des zweiten Betätigungszylinders 72 sind, wobei jedoch nicht ausgeschlossen sein soll, dass auch die übrigen Oberflächen entsprechend nachbearbeitet werden.

Was die Abmessungen der Betätigungszylinder 70 und 72 und der ringförmigen Zylinderführungseinheit 68 und ihre konkreten Formgebungen betreffen, so sind diese derart ausgebildet und aufeinander abgestimmt, dass dann, wenn der erste Betätigungszylinder 70 sich maximal in axialer Richtung an das Zylinderführungsteil 74 angenähert hat, und das Volumen der ersten Betätigungskammer 118 maximal reduziert ist, bzw. nur noch ein vernachlässigbares Restvolumen aufweist, der Zylinderboden 96 an dem Verbindungsflansch 82 zur Anlage kommt, wohingegen dann, wenn das Volumen der zweiten Betätigungskammer 140 maximal reduziert ist, bzw. nur noch ein vernachlässigbares Restvolumen aufweist, und der Zylinderboden 108 des zweiten Betätigungszylinders im Wesentlichen an dem getriebeseitigen Ende des Radialvorsprungs 86 anliegt, das kupplungsseitige Ende der radial äußeren Zylinderseitenwand 104 des zweiten Betätigungszylinders 72 im Wesentlichen an dem getriebeseitigen Ende des Verbindungsflansches 82 der ringförmigen Zylinderführungseinheit 86 anliegt. Darüber hinaus sind die bei einer maximalen Annäherung einander zugeordneten Flächen des zweiten Betätigungszylinders 72 und des Dichtungsteils 84 mit einer korrespondierenden Formgebung bzw. einander entsprechenden in Axialrichtung versetzten Stufen ausgebildet, um so einen maximalen Hub des zweiten Betätigungszylinders und eine gleichmäßige Lastverteilung sicher zu stellen.

Die erste Betätigungskammer 118 wird über einen in Fig. 2 dargestellten Druckfluidkanal 142 mit Druckfluid versorgt, welcher sich ausgehend von einer getriebeseitigen Druckfluidanschlussöffnung 144 zunächst schräg verlaufend und dann in axialer Richtung im Inneren des Zylinderführungsteils 74 bis zur Stirnseite 116 des Zylinderführungsteils 74 erstreckt, um in die erste Betätigungskammer 118 zu münden.

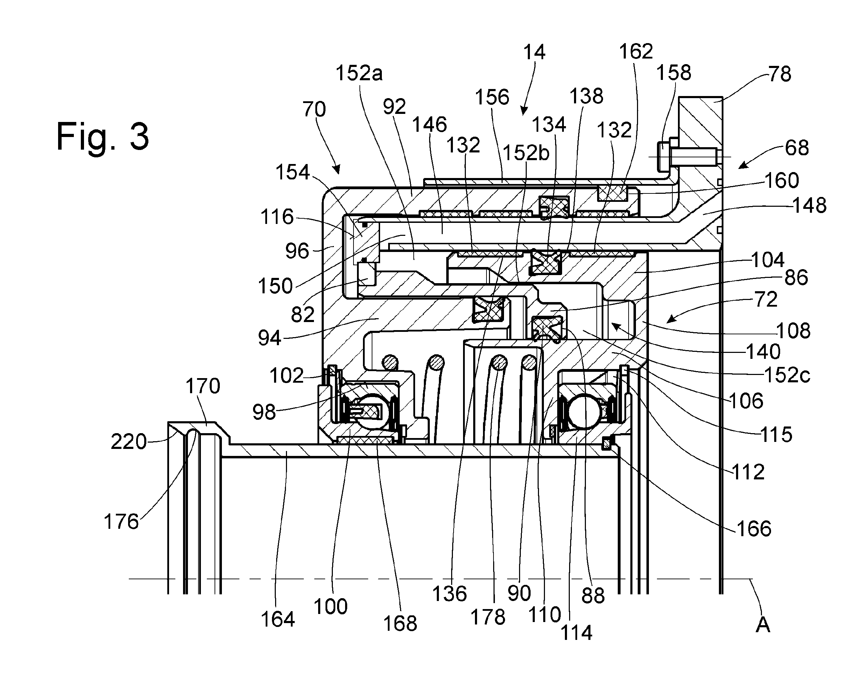

Die zweite Betätigungskammer 140 wird über einen in Fig. 3 dargestellten, in Umfangsrichtung der Zylinderführungseinheit 68 zu dem ersten Druckfluidkanal 142 versetzten und im Wesentlichen auf gleichem radialen Niveau angeordneten zweiten Fluidfluidkanal 146 mit Druckfluid versorgt, welcher sich ausgehend von einer getriebeseitigen Druckfluidanschlussöffnung 148 zunächst schräg verlaufend und dann in axialer Richtung im Inneren des Zylinderführungsteils 74 bis zu dem Verbindungsflansch 82 erstreckt, von wo aus der zweite Druckfluidkanal 146 über einen radial nach innen weisenden Durchgang 150 mit einem in radialer Richtung zwischen dem Zylinderführungsteil 74 und dem Dichtungsteil 84 ausgebildeten Ringraum 152a und von dort durch einen axialen Schlitz 152b mit einem getriebeseitigen Ringraum 152c in Verbindung steht, wobei die beiden Ringräume 152a und 152c sowie der Schlitz 152b die zweite Betätigungskammer 140 bilden.

Die Druckfluidkanäle 142 und 146 bestehen aus einzelnen Bohrungsabschnitten, die in mehreren Arbeitsschritten gefertigt werden. Um beispielsweise den zweiten Druckfluidkanal 146 und den Durchgang 150 möglichst einfach auszuführen, wird zunächst der zweite Druckfluidkanal 146 über eine Bohrung mit kleinem Durchmesser in dem Zylinderführungsteil 74 ausgebildet, worauf von der Kupplungsseite her eine zweite Bohrung mit größerem Durchmesser in das Zylinderführungsteil 74 derart eingebracht wird, dass die erste den Druckfluidkanal 146 in dem Zylinderführungsteil 74 ausbildende Bohrung so tief erweitert wird, dass eine Verbindung zwischen dem zweiten Druckfluidkanal 146 und dem Ringraum 152 entsteht, wobei die entstandene Verbindung zur ersten Betätigungskammer 118 hin mit Hilfe eines beispielsweise eingepressten Stopfens oder Deckels 154 verschlossen wird.

Um ein Eindringen von Schmutz in den Bereich zwischen der radial äußeren Zylinderseitenwand 92 und dem Zylinderführungsteil 74 zu verhindern, ist eine an dem Montageflansch 78 mittels Befestigungsbolzen 158 angebrachte ringförmige Abdeckung 156 vorgesehen, welche das Zylinderführungsteil 74 koaxial umgibt und mittels einer in einer Außenumfangsnut 160 der Zylinderseitenwand 92 aufgenommenen Dichtung 162 gegenüber dem Zylinderführungsteil 74 abgedichtet ist.

An der radialen Innenseite der Druckfluid-Betätigungsanordnung 14 wird die Funktion einer Schmutzabdeckung von einem hülsenartigen Bauteil 164 übernommen, welches getriebeseitig an einem radial inneren Laufring des getriebeseitigen Betätigungslagers 114 mittels eines Sicherungsrings 166 festgelegt ist. Das hülsenartige Bauteil 164 durchsetzt dabei beide Betätigungszylinder 70 und 72 in axialer Richtung radial innen in Richtung auf die Kupplung zu und liegt unter Zwischenschaltung eines Gleitlagerelements 168 an der radialen Innenseite eines radial inneren Laufrings des Betätigungslagers 100 in axialer Richtung verschiebbar an, wobei das Gleitlagerelement 168 auch abdichtende Funktionen übernehmen kann, um auf diese Weise einen radial inneren Bereich zwischen den zwei Betätigungszylindern 70 und 72 abzudichten.

Wie man in Fig. 1 erkennt, erstreckt sich das hülsenartig Bauteil 164 über das kupplungsseitige Ende der Druckfluid-Betätigungsanordnung 14 hinaus auf die Doppelkupplung 12 zu und ist an seinem kupplungsseitigen Ende mit einem aufgeweiteten Anschlussring 170 versehen, welcher über einen Lastring 172 an den sich radial nach innen erstreckenden Federzungen der Membranfeder 48 anliegt. Um die Montage zu erleichtern ist der Anschlussring 170 mittels eines Sicherungsrings 174 mit dem Lastring 172 verbunden, welcher Sicherungsring 174 in eine am radialen inneren Umfang des Anschlussrings 170 ausgebildete Ringnut 176 eingreift, wenn der Anschlussring 170 auf getriebeseitige Ende des Lastrings 172 aufgeschoben wird.

Wie man deutlich in den Fig. 2 und 3 erkennt, befinden sich die beiden Betätigungslager 100 und 114 annähernd auf gleichem Durchmesser und sind darüber hinaus so weit wie möglich radial innen angeordnet, um die Betätigungslager 100 und 114 möglichst verschleißarm auszuführen. Darüber hinaus sind den beiden Betätigungszylindern 70 und 72 eine diese in Richtung Kraftbeaufschlagung des jeweils zugeordneten Kupplungsbereichs vorspannende Vorspannfeder 178 in der Form einer Schraubendruckfeder zugeordnet, welche sich zwischen den beiden Betätigungszylinder 70 und 72 im Bereich der Betätigungslager 100 und 114 einerseits an der Ringwand 110 des zweiten Betätigungszylinders 72 und andererseits an dem radial inneren Ende des Zylinderbodens 96 des ersten Betätigungszylinders 70 axial abstützt, um so die zugeordneten Betätigungszylinder 70 und 72 in Richtung auf die jeweils zugeordnete Membranfeder 48 bzw. den zugeordneten Hebelring 56 derart zu belasten, dass auch bei fehlendem Fluiddruck in den Betätigungskammern 118 und 140 eine definierte Wechselwirkungspositionierung der Betätigungszylinder 70, 72 bezüglich der zugeordneten Membranfeder 48 bzw. des zugeordneten Hebelrings 56 beibehalten werden kann.

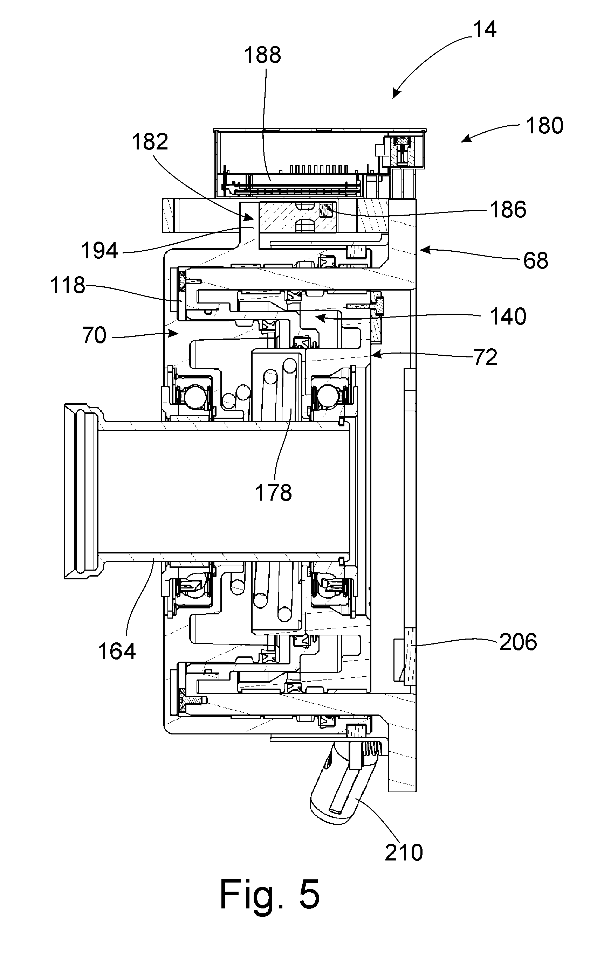

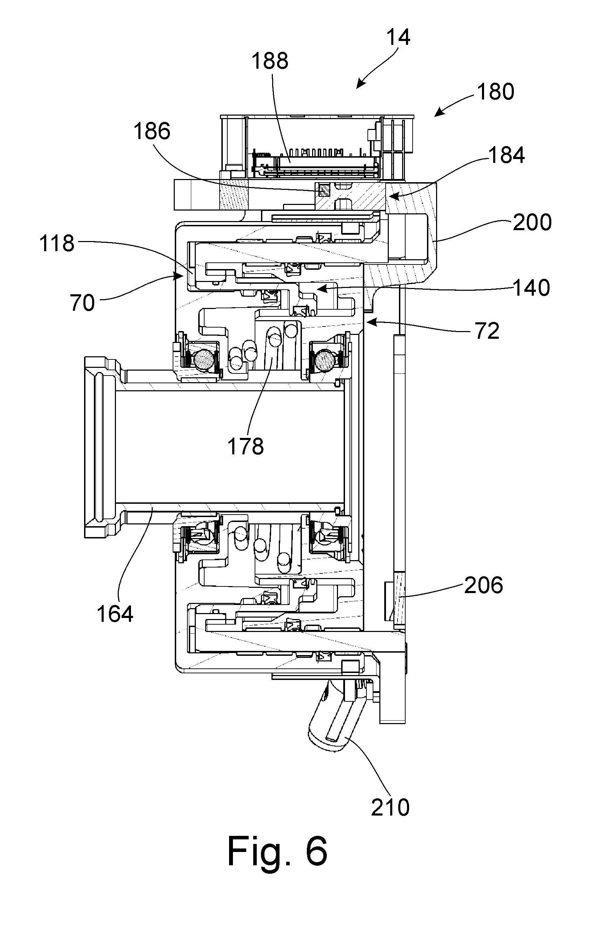

Da das Betätigungsfluid vorzugsweise Luft ist, ist eine spezielle Sensorik erforderlich. Diese Sensorik besteht aus einer radial außerhalb des ersten Betätigungszylinders 70 angeordneten Sensoreinheit 180 und an den Betätigungszylindern 70 und 72 befestigten Positionsgebern, wobei der dem ersten Betätigungszylinder 70 zugeordnete Positionsgeber mit der Bezugszahl 182 bezeichnet ist (siehe Fig. 5) und der dem zweiten Betätigungszylinder 72 zugeordnete zweite Positionsgeber mit dem Bezugszeichen 184 bezeichnet ist (siehe Fig. 6). Jeder der Positionsgeber 182, 184 umfasst in der vorliegenden Ausführungsform einen Magneten 186, welche von der Sensoreinheit 180 über zwei an der radialen Unterseite der Sensoreinheit 180 angeordnete Sensorspulen 188 aufgenommen werden, um die Zylinderwege der beiden Betätigungszylinder 70, 72 in zwei Sensorbereichen zu erfassen, je einer für einen Betätigungszylinder.

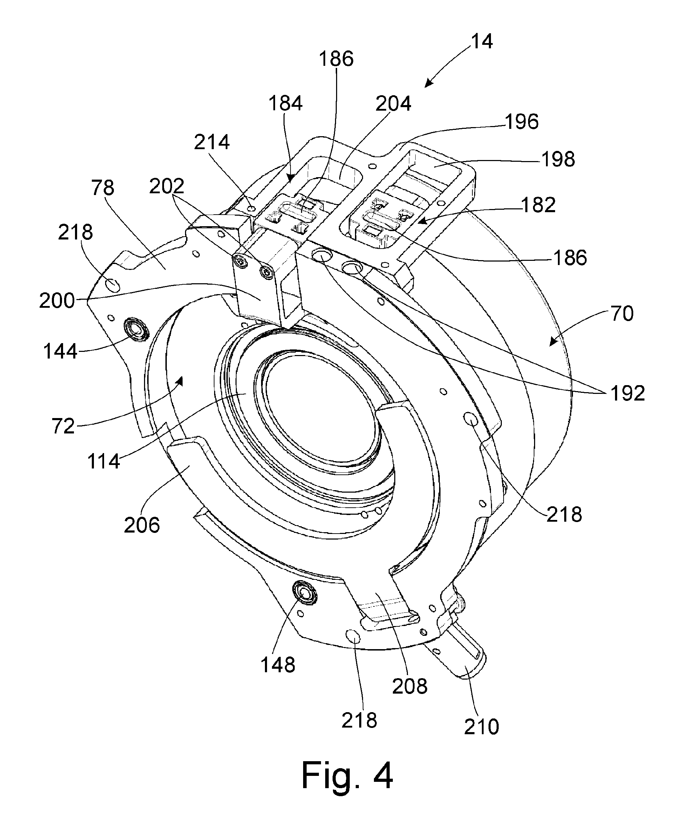

Für jeden Betätigungszylinder ist darüber hinaus ein nicht näher dargestellter Drucksensor innerhalb der Sensoreinheit 180 vorgesehen, wobei zur Ankopplung der Drucksensoren an die jeweiligen Betätigungskammern oder Druckfluidkanäle an der zu der Druckfluid-Betätigungsanordnung 14 weisenden Unterseite der Sensoreinheit 180 zwei Steckanschlüsse 190 vorgesehen sind, welche im montierten Zustand der Sensoreinheit 180 in zwei in Fig. 4 dargestellten Anschlussöffnungen 192 aufgenommen sind, welche am radial äußeren Umfang des Montageflansches 78 ausgebildet sind.

Der erste Positionsgeber 182 ist an einem sich von der radial äußeren Zylinderseitenwand 92 des ersten Betätigungszylinders 70 radial nach außen erstreckenden Radialvorsprung 194 angebracht und in einer in einem Führungsgehäuse 196 ausgebildeten ersten Axialführung 198 in Achsrichtung der Doppelkupplungsanordnung 10 verschiebbar aufgenommen. Der zweite Positionsgeber 184 ist mit dem zweiten Betätigungszylinder 72 mit Hilfe eines U-förmigen Verbindungsbauteils 200 verbunden, welches sich von der radial äußeren Zylinderseitenwand 104 des zweiten Betätigungszylinders 72 auf der Getriebeseite im Wesentlichen U-förmig um das getriebeseitige Ende des Zylinderführungsteils 74 herum erstreckt und mit dem Positionsgeber 184 auf der Getriebeseite mittels zweier Befestigungsbolzen 202 lösbar verbunden und in einer zweiten Axialführung 204 in dem Führungsgehäuse 196 in Achsrichtung verschiebbar geführt ist.

Unter Bezugnahme auf Fig. 4 ist in der unteren Hälfte der Druckfluid-Betätigungsanordnung 14 ein U-förmiges Element 206 angeordnet, welches über einen in Fig. 4 rechts unten dargestellten Steg 208 mit einem Anschlussteil 210 verbunden ist, welches Anschlussteil 210 zur Verbindung mit einer nicht dargestellten Betätigungsstange dient, um bei der Montage der Druckfluid-Betätigungsanordnung 14 den zweiten Betätigungszylinder 72 über das U-förmige Element 206 in Richtung Doppelkupplung 12 zu verlagern, um auf diese Weise eine Ankopplung des Anschlussrings 170 des hülsenartigen Bauteils 164 an den Lastring 172 zu ermöglichen.

Ferner erkennt man in Fig. 4 die Druckanschlussöffnungen 144 und 148 des ersten Druckfluidkanals 142 und des zweiten Druckfluidkanals 146, welche im eingebauten Zustand der Druckfluid-Betätigungsanordnung 14 mit zwei in einer kupplungsseitigen Getriebewand ausgebildeten Druckfluidanschlussöffnungen in Verbindung stehen, um die Druckfluid-Betätigungsanordnung 14 mit Druckfluid zu versorgen und zu betätigen.

Zur Befestigung der Sensoreinheit 180 an dem Führungsgehäuse 196 ist die Sensoreinheit 180 mit vier Durchgangsbohrungen 212 versehen, durch welche von der Außenseite der Sensoreinheit 180 her Schraubbolzen in Gewindebohrungen 214 einzuschrauben sind, welche in dem Führungsgehäuse 196 ausgebildet sind. Darüber hinaus ist die Sensoreinheit 180 mit einem elektrischen Anschlussteil 214 zur Verbindung mit einem Steckerteil 216 versehen. Zur Befestigung der Druckfluid-Betätigungsanordnung 14 an einer nicht dargestellten Getriebeglocke dienen im Montageflansch 78 ausgebildete Bohrungen 218 zur Aufnahme von nicht dargestellten Befestigungsbolzen.

Zur Anbringung der Druckfluid-Betätigungsanordnung 14 an der Doppelkupplung 12 wird die Druckfluid-Betätigungsanordnung 14 in Achsrichtung der Drehachse A so lange auf die Doppelkupplung 12 zu verschoben, bis das Betätigungslager 100 des ersten Betätigungszylinders 70 an dem radial inneren Ende des Hebelrings 56 anliegt. Sodann wird durch eine Bedienung des Anschlussteils 210 das U-förmige Element 206 auf den zweiten Betätigungszylinder 72 zu verlagert, was eine Axialverschiebung des zweiten Betätigungszylinders 72 und des mit ihm beispielsweise mittels eines Presssitzes gekoppelten hülsenartigen Bauteils 164 auf den ersten Betätigungszylinder 70 zu unter axialer Kompression der Schraubendruckfeder 178 zur Folge hat, bis der Anschlussring 170 des hülsenartigen Bauteils 164 unter Zuhilfenahme einer kupplungsseitigen Anschlussschräge 220 über den am Lastring 172 festgelegten Sicherungsring 174 schnappt und dieser in die Ringnut 176 einrastet, um das hülsenartige Bauteil 164 und den Lastring 172 miteinander zu koppeln.

Dies bedeutet, dass auf diese Art und Weise ein Kraftrückschluss zwischen der Druckfluid-Betätigungsanordnung 14 und der Doppelkupplung 12 gebildet ist, so dass Betätigungskräfte nicht auf externe Baugruppen, wie z. B. das Getriebe oder eine Kurbelwelle einer Brennkraftmaschine, übertragen werden. Grundsätzlich kann also die Doppelkupplungsanordnung 10 mit den beiden Systembereichen Doppelkupplung 12 und Druckfluid-Betätigungsanordnung 14 als vormontierte, zusammengefasste Einheit in einen Antriebsstrang integriert werden, ohne dass dabei beispielsweise eine mechanisch feste Anbindung der Druckfluid-Betätigungsanordnung 14 an das Getriebe bzw. ein Getriebegehäuse erforderlich wäre.

Soll der erste Kupplungsbereich 16, welcher vom Normal-Offen-Typ ist, eingerückt werden, was dadurch erfolgt, dass der Hebelring 56 an seinem radial inneren Ende mittels des ersten Betätigungszylinders 70 unter Zwischenschaltung des ersten Betätigungslagers 100 in axialer Richtung auf die Doppelkupplung 12 zu verschoben wird, wird dies erreicht, indem der ersten Betätigungskammer 118 über den Druckfluidkanal 142 Druckfluid zugeführt wird, bis der erste Kupplungsbereich 16 vollständig eingerückt ist, wobei das Erreichen des Einrückzustands, bzw. die zum Erreichen des Einrückzustands notwendige Axialverschiebung des ersten Betätigungszylinders 70, mittels der Sensoreinheit 180 erfasst wird.

Soll hingegen der zweite Kupplungsbereich 18, welcher vom Normal-Geschlossen-Typ ist, aktiv geöffnet bzw. ausgekuppelt werden, so wird der zweiten Betätigungskammern 140, d. h. den beiden durch den axialen Schlitz 152b verbundenen Ringräumen 152a und 152c, über den zweiten Druckfluidkanal 146 und den Durchgang 150 Druckfluid zugeführt, um eine Verlagerung des zweiten Betätigungszylinders 72 in Richtung Getriebe, d. h. in einer von der Bewegungsrichtung des ersten Betätigungszylinders 70 entgegengesetzten zweiten Richtung zu erreichen, um unter Zwischenschaltung des Betätigungslagers 114, des hülsenartigen Bauteils 164 und des Lastringes 172 die Federzungen der Membranfeder 48 der zweiten Kraftbeaufschlagungsanordnung 66 in Richtung auf das Getriebe zu zu verlagern, um so die zweite Kupplungsscheibenbaugruppe 40 auszukuppeln.

Das in die Betätigungskammern 118 und 140 eingeleitete Druckfluid kann Druckluft sein, welches beispielsweise von einem Druckspeicher, gespeist von einem Kompressor, und unter der Ansteuerung eines Druckluftventils zugeführt wird.

Ferner sei darauf hingewiesen, dass die erste Axialführung 198 und die zweite Axialführung 204, welche zur Führung des ersten und des zweiten Positionsgebers 182 und 184 dienen, gleichzeitig als Verdrehsicherung für die beiden Betätigungszylinder 70 und 72 dienen, so dass eine gesonderte Verdrehsicherung nicht erforderlich ist.

Durch die vorliegende Erfindung ist eine Druckfluid-Betätigungsanordnung bzw. eine damit ausgestattete Doppelkupplungsanordnung vorgesehen, welche bei kompakter Baugröße eine zuverlässige und definierte Betätigung der beiden Kupplungsbereiche einer Doppelkupplung gewährleistet. Da insbesondere eine Kraftabstützung innerhalb der Doppelkupplungsanordnung selbst erfolgt, also externe Komponenten nicht beaufschlagt werden, wenn eine Betätigungskraft, also entweder eine Einrückkraft oder eine Ausrückkraft erzeugt wird, kann diese Doppelkupplungsanordnung als autarke Baugruppe in ein Antriebssystem eingegliedert werden.

## Patentansprüche

1. Druckfluid-Betätigungsanordnung (14) für eine Doppelkupplung (12), umfassend eine ringförmige Zylinderführungseinheit (68) und zwei koaxial zu einer Zentralachse (A) angeordnete und an der Zylinderführungseinheit (68) fluiddicht verschiebbar geführte ringförmige Betätigungszylinder (70, 72) zur Kraftbeaufschlagung eines jeweils zugeordneten Kupplungsbereichs (16, 18) der Doppelkupplung (12),
wobei die Zylinderführungseinheit (68) mit einem ersten (70) der Betätigungszylinder (70, 72) eine erste Betätigungskammer (118) zur Aufnahme von Druckfluid ausbildet und mit einem zweiten (72) der Betätigungszylinder (70, 72) eine zweite Betätigungskammer (140) zur Aufnahme von Druckfluid ausbildet,
wobei sich die zwei Betätigungskammern (118, 140) radial überlappen und
wobei die Druckfluid-Betätigungsanordnung (14) zu den Betätigungskammern (118, 140) führende Druckfluidkanäle (142, 146) aufweist,
**dadurch gekennzeichnet,**
**dass** die Druckfluidkanäle (142, 146) für beide Betätigungskammern (118, 140) in der Zylinderführungseinheit (68) ausgebildet und im Wesentlichen auf gleichem radialen Niveau angeordnet sind.

2. Druckfluid-Betätigungsanordnung nach Anspruch 1, **dadurch gekennzeichnet, dass** die erste Betätigungskammer (118) im Wesentlichen zwischen dem ersten Betätigungszylinder (70) und der Stirnseite (116) der Zylinderführungseinheit (68) gebildet ist.

3. Druckfluid-Betätigungsanordnung nachAnspruch 1 oder 2,
**dadurch gekennzeichnet, dass** jeder Betätigungszylinder (70, 72) zwei in einer radialen Richtung einander gegenüberliegende Zylinderseitenwände (92, 94 und 104, 106) aufweist, welche miteinander durch einen Zylinderboden (96 und 108) verbunden sind.

4. Druckfluid-Betätigungsanordnung nach Anspruch 3,
**dadurch gekennzeichnet, dass** zwischen den einander gegenüberliegenden Seitenwänden eines Betätigungszylinders (70, 72) ein Aufnahmeraum zur Aufnahme einer Zylinderseitenwand (94, 104) des jeweils anderen Betätigungszylinders (70, 72) gebildet ist.

5. Druckfluid-Betätigungsanordnung nach einem der Ansprüche 1 bis 4,
**dadurch gekennzeichnet, dass** die Zylinderführungseinheit (68) einen radial äußeren ringförmigen Zylinderführungsteil (74) und einen konzentrisch zu dem Zylinderführungsteil (74) angeordneten radial inneren ringförmigen Dichtungsteil (84) aufweist.

6. Druckfluid-Betätigungsanordnung nach Anspruch 5 und Anspruch 3 oder 4,
**dadurch gekennzeichnet, dass** jeweils eine Zylinderseitenwand (92, 104) eines Betätigungszylinders (70, 72) vorzugsweise unter Zwischenschaltung wenigstens eines Gleitlagerelements (120, 132) an dem Zylinderführungsteil (74) geführt ist.

7. Druckfluid-Betätigungsanordnung nach Anspruch 6,
**dadurch gekennzeichnet, dass** der erste Betätigungszylinder (70) mit der seiner anderen Zylinderseitenwand (94) zugewandten Seite seiner radial äußeren Zylinderseitenwand (92) an der radialen Außenseite des Zylinderführungsteils (74) fluiddicht verschiebbar geführt ist und der zweite Betätigungszylinder (72) mit der von seiner anderen Zylinderseitenwand (106) abgewandten Seite seiner radial äußeren Zylinderseitenwand (104) an der radialen Innenseite des Zylinderführungsteils (74) fluiddicht verschiebbar geführt ist.

8. Druckfluid-Betätigungsanordnung nach Anspruch 5, 6 oder 7 und Anspruch 3 oder 4,
**dadurch gekennzeichnet, dass** zwischen den einander gegenüberliegenden Seitenwänden (92, 94 und 104, 106) eines Betätigungszylinders (70, 72) ein Aufnahmeraum zur Aufnahme des Dichtungsteils (84) der Zylinderführungseinheit (68) gebildet ist.

9. Druckfluid-Betätigungsanordnung nach Anspruch 7 und 8,
**dadurch gekennzeichnet, dass** der erste Betätigungszylinder (70) mit der seiner anderen Zylinderseitenwand (92) zugewandten Seite seiner radial inneren Zylinderseitenwand (94) unter Zwischenschaltung eines Dichtungselements (130) fluiddicht verschiebbar an der radialen Innenseite des Dichtungsteils (84) anliegt und der zweite Betätigungszylinder (72) mit der seiner anderen Zylinderseitenwand (104) zugewandten Seite seiner radial inneren Zylinderseitenwand (106) unter Zwischenschaltung eines Dichtungselements (90) fluiddicht verschiebbar an der radialen Innenseite des Dichtungsteils (84) anliegt.

10. Druckfluid-Betätigungsanordnung nach einem der Ansprüche 1 bis 9,
**dadurch gekennzeichnet, dass** die Druckfluidkanäle (142, 146) in Umfangsrichtung der Zylinderführungseinheit (68) versetzt angeordnet sind.

11. Druckfluid-Betätigungsanordnung nach einem der Ansprüche 1 bis 10,
**dadurch gekennzeichnet, dass** die beiden Betätigungszylinder (70, 72) zur Erzeugung einer Kraftbeaufschlagungswirkung in axial entgegengesetzte Richtungen verschiebbar sind.

12. Druckfluid-Betätigungsanordnung nach einem der Ansprüche 1 bis 11,
**dadurch gekennzeichnet, dass** den beiden Betätigungszylindern (70, 72) eine diese in Richtung Kraftbeaufschlagung des zugeordneten Kupplungsbereichs (16, 18) vorspannende Vorspannanordnung (178) zugeordnet ist, welche vorzugsweise eine an beiden Betätigungszylindern (70, 72) abgestützte Vorspannfeder (178) umfasst.

13. Druckfluid-Betätigungsanordnung nach einem der Ansprüche 1 bis 12
**dadurch gekennzeichnet, dass** ein radial innerer der Betätigungszylinder (72) mit einem hülsenartigen Bauteil (164) zur Betätigung des zugeordneten Kupplungsbereichs (18) verbunden ist, wobei das hülsenartige Bauteil (164) beide Betätigungszylinder (70, 72) und die Zylinderführungseinheit (68) in axialer Richtung radial innen durchsetzt.

14. Druckfluid-Betätigungsanordnung nach einem der Ansprüche 1 bis 13,
**dadurch gekennzeichnet, dass** wenigstens einem Betätigungszylinder (70, 72) eine Sensoranordnung (180, 182, 184) zugeordnet ist, um die Lage des Betätigungszylinders (70, 72) oder/und den am Betätigungszylinder (70, 72) anliegenden Fluiddruck zu erfassen.

15. Doppelkupplungsanordnung, umfassend:
- einen ersten Kupplungsbereich (16) mit einer ersten Kupplungsscheibenbaugruppe (30) und einer ersten Anpressplatte (28),
- einen zweiten Kupplungsbereich (18) mit einer zweiten Kupplungsscheibenbaugruppe (40) und einer zweiten Anpressplatte (38),
- eine Zwischenplatte (20) zwischen den beiden Kupplungsscheibenbaugruppen (30, 40),
- eine mit der Zwischenplatte (20) verbundene Gehäuseanordnung (22), wobei die erste Anpressplatte (28) und die erste Kupplungsscheibenbaugruppe (30) an einer ersten axialen Seite der Zwischenplatte (20) angeordnet sind und die zweite Anpressplatte (38), die zweite Kupplungsscheibenbaugruppe (40) und die Gehäuseanordnung (22) im Wesentlichen an einer zweiten axialen Seite der Zwischenplatte (20) angeordnet sind,
- eine erste Kraftbeaufschlagungsanordnung (54), über welche eine Betätigungskraft auf die erste Anpressplatte (28) leitbar ist, wobei die erste Kraftbeaufschlagungsanordnung (54) den zweiten Kupplungsbereich (18) und die Zwischenplatte (20) axial übergreift und ein bezüglich der Gehäuseanordnung (22) abgestütztes erstes Kraftbeaufschlagungselement (56) umfasst,
- eine zweite Kraftbeaufschlagungsanordnung (66), über welche eine Betätigungskraft auf die zweite Anpressplatte (38) leitbar ist, wobei die zweite Kraftbeaufschlagungsanordnung (66) ein bezüglich der Gehäuseanordnung (22) abgestütztes zweites Kraftbeaufschlagungselement (48) umfasst, und
- eine Druckfluid-Betätigungsanordnung (14) nach einem der vorangehenden Ansprüche, wobei der erste Betätigungszylinder (70) mit der ersten Kraftbeaufschlagungsanordnung (54) zusammenwirkt und der zweite Betätigungszylinder (72) mit der zweiten Kraftbeaufschlagungsanordnung (66) zusammenwirkt.

## Claims

1. Pressurized-fluid actuating arrangement (14) for a double clutch (12), comprising an annular cylinder guiding unit (68) and two annular actuating cylinders (70, 72) for loading a respectively associated clutch region (16, 18) of the double clutch (12) with force, which actuating cylinders (70, 72) are arranged coaxially with respect to a central axis (A) and are guided such that they can be displaced in a fluid-tight manner on the cylinder guiding unit (68), the cylinder guiding unit (68) forming, with a first (70) of the actuating cylinders (70, 72), a first actuating chamber (118) for receiving pressurized fluid and forming, with a second (72) of the actuating cylinders (70, 72), a second actuating chamber (140) for receiving pressurized fluid, the two actuating chambers (118, 140) overlapping radially, and the pressurized-fluid actuating arrangement (14) having pressurized-fluid ducts (142, 146) which lead to the actuating chambers (118, 140), **characterized in that** the pressurized-fluid ducts (142, 146) for both actuating chambers (118, 140) are configured in the cylinder guiding unit (68) and are arranged substantially on an identical radial level.

2. Pressurized-fluid actuating arrangement according to Claim 1, **characterized in that** the first actuating chamber (118) is formed substantially between the first actuating cylinder (70) and the end side (116) of the cylinder guiding unit (68).

3. Pressurized-fluid actuating arrangement according to Claim 1 or 2, **characterized in that** each actuating cylinder (70, 72) has two cylinder side walls (92, 94 and 104, 106) which lie opposite one another in a radial direction and are connected to one another by way of a cylinder base (96 and 108).

4. Pressurized-fluid actuating arrangement according to Claim 3, **characterized in that** a receiving space for receiving a cylinder side wall (94, 104) of the respectively other actuating cylinder (70, 72) is formed between the side walls of an actuating cylinder (70, 72) which lie opposite one another.

5. Pressurized-fluid actuating arrangement according to one of Claims 1 to 4, **characterized in that** the cylinder guiding unit (68) has a radially outer annular cylinder guiding part (74) and a radially inner annular seal part (84) which is arranged concentrically with respect to the cylinder guiding part (74).

6. Pressurized-fluid actuating arrangement according to Claim 5 and Claim 3 or 4, **characterized in that** in each case one cylinder side wall (92, 104) of an actuating cylinder (70, 72) is guided on the cylinder guiding part (74), preferably with at least one plain bearing element (120, 132) being connected in between.

7. Pressurized-fluid actuating arrangement according to Claim 6, **characterized in that** the first actuating cylinder (70) is guided with that side of its radially outer cylinder side wall (92) which faces its other cylinder side wall (94) on the radial outer side of the cylinder guiding part (74) such that it can be displaced in a fluid-tight manner, and the second actuating cylinder (72) is guided with that side of its radially outer cylinder side wall (104) which faces away from its other cylinder side wall (106) on the radial inner side of the cylinder guiding part (74) such that it can be displaced in a fluid-tight manner.

8. Pressurized-fluid actuating arrangement according to Claim 5, 6 or 7 and Claim 3 or 4, **characterized in that** a receiving space for receiving the seal part (84) of the cylinder guiding unit (68) is formed between the side walls (92, 94 and 104, 106) of an actuating cylinder (70, 72) which lie opposite one another.

9. Pressurized-fluid actuating arrangement according to Claims 7 and 8, **characterized in that** the first actuating cylinder (70) bears with that side of its radially inner cylinder side wall (94) which faces its other cylinder side wall (92) against the radial inner side of the seal part (84) such that it can be displaced in a fluid-tight manner with a seal element (130) being connected in between, and the second actuating cylinder (72) bears with that side of its radially inner cylinder side wall (106) which faces its other cylinder side wall (104) against the radial inner side of the seal part (84) such that it can be displaced in a fluid-tight manner with a seal element (90) being connected in between.

10. Pressurized-fluid actuating arrangement according to one of Claims 1 to 9, **characterized in that** the pressurized-fluid ducts (142, 146) are arranged offset in the circumferential direction of the cylinder guiding unit (68).

11. Pressurized-fluid actuating arrangement according to one of Claims 1 to 10, **characterized in that** the two actuating cylinders (70, 72) can be displaced in axially opposed directions in order to generate a force loading action.

12. Pressurized-fluid actuating arrangement according to one of Claims 1 to 11, **characterized in that** the two actuating cylinders (70, 72) are assigned a prestressing arrangement (178) which prestresses them in the direction of force loading of the associated clutch region (16, 18) and preferably comprises a prestressing spring (178) which is supported on both actuating cylinders (70, 72).

13. Pressurized-fluid actuating arrangement according to one of Claims 1 to 12, **characterized in that** a radially inner one of the actuating cylinders (72) is connected to a sleeve-like component (164) in order to actuate the associated clutch region (18), the sleeve-like component (164) penetrating both actuating cylinders (70, 72) and the cylinder guiding unit (68) in the axial direction radially on the inside.

14. Pressurized-fluid actuating arrangement according to one of Claims 1 to 13, **characterized in that** at least one actuating cylinder (70, 72) is assigned a sensor arrangement (180, 182, 184), in order to detect the position of the actuating cylinder (70, 72) and/or the fluid pressure which prevails at the actuating cylinder (70, 72).

15. Double clutch arrangement, comprising:
- a first clutch region (16) with a first clutch plate assembly (30) and a first pressure plate (28),
- a second clutch region (18) with a second clutch plate assembly (40) and a second pressure plate (38),
- an intermediate plate (20) between the two clutch plate assemblies (30, 40),
- a housing arrangement (22) which is connected to the intermediate plate (20), the first pressure plate (28) and the first clutch plate assembly (30) being arranged on a first axial side of the intermediate plate (20) and the second pressure plate (38), the second clutch plate assembly (40) and the housing arrangement (22) being arranged substantially on a second axial side of the intermediate plate (20),
- a first force loading arrangement (54), via which an actuating force can be guided to the first pressure plate (28), the first force loading arrangement (54) engaging axially over the second clutch region (18) and the intermediate plate (20) and comprising a first force loading element (56) which is supported with regard to the housing arrangement (22),
- a second force loading arrangement (66), via which an actuating force can be guided to the second pressure plate (38), the second force loading arrangement (66) comprising a second force loading element (48) which is supported with regard to the housing arrangement (22), and
- a pressurized-fluid actuating arrangement (14) according to one of the preceding claims, the first actuating cylinder (70) interacting with the first force loading arrangement (54) and the second actuating cylinder (72) interacting with the second force loading arrangement (66).

## Revendications

1. Agencement d'actionnement par fluide sous pression (14) pour un embrayage double (12), comportant une unité de guidage de cylindre annulaire (68) et deux cylindres d'actionnement annulaires (70, 72) disposés de manière coaxiale par rapport à un axe central (A) et guidés de manière coulissante et étanche aux fluides sur l'unité de guidage de cylindre (68) en vue de la sollicitation par une force d'une région d'embrayage (16, 18) associée respective de l'embrayage double (12),
l'unité de guidage de cylindre (68) réalisant, avec un premier (70) des cylindres d'actionnement (70, 72), une première chambre d'actionnement (118) pour la réception de fluide sous pression et, avec un deuxième (72) des cylindres d'actionnement (70, 72), une deuxième chambre d'actionnement (140) pour la réception de fluide sous pression,
les deux chambres d'actionnement (118, 140) se chevauchant radialement et
l'agencement d'actionnement par fluide sous pression (14) comprenant des canaux de fluide sous pression (142, 146) menant jusqu'aux chambres d'actionnement (118, 140),
**caractérisé en ce que**
les canaux de fluide sous pression (142, 146) pour les deux chambres d'actionnement (118, 140) sont réalisés dans l'unité de guidage de cylindre (68) et sont disposés essentiellement au même niveau radial.

2. Agencement d'actionnement par fluide sous pression selon la revendication 1, **caractérisé en ce que** la première chambre d'actionnement (118) est formée essentiellement entre le premier cylindre d'actionnement (70) et le côté frontal (116) de l'unité de guidage de cylindre (68).

3. Agencement d'actionnement par fluide sous pression selon la revendication 1 ou 2,
**caractérisé en ce que** chaque cylindre d'actionnement (70, 72) comprend deux parois latérales de cylindre (92 94 et 104, 106) en regard l'une de l'autre dans une direction radiale, lesquelles sont reliées l'une à l'autre par un fond de cylindre (96 et 108).

4. Agencement d'actionnement par fluide sous pression selon la revendication 3,
**caractérisé en ce qu'**entre les parois latérales en regard l'une de l'autre d'un cylindre d'actionnement (70, 72) est formé un espace de réception pour la réception d'une paroi latérale de cylindre (94, 104) de l'autre cylindre d'actionnement (70, 72) respectif.

5. Agencement d'actionnement par fluide sous pression selon l'une quelconque des revendications 1 à 4,
**caractérisé en ce que** l'unité de guidage de cylindre (68) comprend une partie de guidage de cylindre (74) annulaire radialement extérieure et une partie d'étanchéité (84) annulaire radialement intérieure disposée de manière concentrique à la partie de guidage de cylindre (74).

6. Agencement d'actionnement par fluide sous pression selon la revendication 5 et la revendication 3 ou 4,
**caractérisé en ce qu'**une paroi latérale de cylindre (92, 104) respective d'un cylindre d'actionnement (70, 72) est guidée sur la partie de guidage de cylindre (74) de préférence par l'intermédiaire d'au moins un élément de palier lisse (120, 132).

7. Agencement d'actionnement par fluide sous pression selon la revendication 6,
**caractérisé en ce que** le premier cylindre d'actionnement (70) est guidé de manière coulissante et étanche aux fluides sur le côté extérieur radial de la partie de guidage de cylindre (74) par le côté de sa paroi latérale de cylindre (92) radialement extérieure tourné vers son autre paroi latérale de cylindre (94), et le deuxième cylindre d' actionnement (72) est guidé de manière coulissante et étanche aux fluides sur le côté intérieur radial de la partie de guidage de cylindre (74) par le côté de sa paroi latérale de cylindre (104) radialement extérieure opposé à son autre paroi latérale de cylindre (106).

8. Agencement d'actionnement par fluide sous pression selon la revendication 5, 6 ou 7 et la revendication 3 ou 4,
**caractérisé en ce qu'**entre les parois latérales (92, 94 et 104, 106) en regard l'une de l'autre d'un cylindre d'actionnement (70, 72) est formé un espace de réception pour la réception de la partie d'étanchéité (84) de l'unité de guidage de cylindre (68).

9. Agencement d'actionnement par fluide sous pression selon les revendications 7 et 8,
**caractérisé en ce que** le premier cylindre d'actionnement (70) s'applique contre le côté intérieur radial de la partie d'étanchéité (84) de manière coulissante et étanche aux fluides par l'intermédiaire d'un élément d'étanchéité (130) par le côté de sa paroi latérale de cylindre (94) radialement intérieure tourné vers son autre paroi latérale de cylindre (92), et le deuxième cylindre d'actionnement (72) s'applique contre le côté intérieur radial de la partie d'étanchéité (84) de manière coulissante et étanche aux fluides par l'intermédiaire d'un élément d'étanchéité (90) par le côté de sa paroi latérale de cylindre (106) radialement intérieure tourné vers son autre paroi latérale de cylindre (104).

10. Agencement d'actionnement par fluide sous pression selon l'une quelconque des revendications 1 à 9,
**caractérisé en ce que** les canaux de fluide sous pression (142, 146) sont disposés de manière décalée dans la direction périphérique de l'unité de guidage de cylindre (68).

11. Agencement d'actionnement par fluide sous pression selon l'une quelconque des revendications 1 à 10,
**caractérisé en ce que** les deux cylindres d'actionnement (70, 72) sont coulissants dans des sens axialement opposés en vue de la génération d'un effet de sollicitation par une force.

12. Agencement d'actionnement par fluide sous pression selon l'une quelconque des revendications 1 à 11,
**caractérisé en ce qu'**aux deux cylindres d'actionnement (70, 72) est associé un agencement de précontrainte (178) assurant la précontrainte de ceux-ci dans la direction de la sollicitation par une force de la région d'embrayage (16, 18) associée, lequel agencement de précontrainte comporte de préférence un ressort de précontrainte (178) s'appuyant contre les deux cylindres d'actionnement (70, 72).

13. Agencement d'actionnement par fluide sous pression selon l'une quelconque des revendications 1 à 12,
**caractérisé en ce qu'**un cylindre d'actionnement radialement intérieur des cylindres d'actionnement (72) est relié à un composant (164) de type douille en vue de l'actionnement de la région d'embrayage (18) associée, le composant (164) de type douille traversant radialement à l'intérieur les deux cylindres d'actionnement (70, 72) et l'unité de guidage de cylindre (68) dans la direction axiale.

14. Agencement d'actionnement par fluide sous pression selon l'une quelconque des revendications 1 à 13,
**caractérisé en ce qu'**un agencement de capteurs (180, 182, 184) est associé à au moins un cylindre d'actionnement (70, 72), afin de détecter la position du cylindre d'actionnement (70, 72) et/ou la pression de fluide s'appliquant contre le cylindre d'actionnement (70, 72).

15. Agencement d'embrayage double, comportant :
- une première région d'embrayage (16) comprenant un premier module de disques d'embrayage (30) et un premier plateau de pression (28),
- une deuxième région d'embrayage (18) comprenant un deuxième module de disques d'embrayage (40) et un deuxième plateau de pression (38),
- un plateau intermédiaire (20) entre les deux modules de disques d'embrayage (30, 40),
- un agencement de boîtier (22) relié au plateau intermédiaire (20), le premier plateau de pression (28) et le premier module de disques d'embrayage (30) étant disposés sur un premier côté axial du plateau intermédiaire (20) et le deuxième plateau de pression (38), le deuxième module de disques d'embrayage (40) et l'agencement de boîtier (22) étant disposés essentiellement sur un deuxième côté axial du plateau intermédiaire (20),
- un premier agencement de sollicitation par une force (54), par le biais duquel une force d'actionnement peut être dirigée vers le premier plateau de pression (28), le premier agencement de sollicitation par une force (54) recouvrant axialement la deuxième région d'embrayage (18) et le plateau intermédiaire (20) et comportant un premier élément de sollicitation par une force (56) supporté par rapport à l'agencement de boîtier (22),
- un deuxième agencement de sollicitation par une force (66), par le biais duquel une force d'actionnement peut être dirigée vers le deuxième plateau de pression (38), le deuxième agencement de sollicitation par une force (66) comportant un deuxième élément de sollicitation par une force (48) supporté par rapport à l'agencement de boîtier (22), et
- un agencement d'actionnement par fluide sous pression (14) selon l'une quelconque des revendications précédentes, le premier cylindre d'actionnement (70) coopérant avec le premier agencement de sollicitation par une force (54) et le deuxième cylindre d'actionnement (72) coopérant avec le deuxième agencement de sollicitation par une force (66).
